# EUROPEAN PATENT APPLICATION

(11) **EP 2 085 437 A1**
(43) Date of publication of application: **05.08.2009**
(21) Application number: 08150951.5
(22) Date of filing: 01.02.2008
(51) Int. Cl.: C09D 7/12, B41M 5/28

(54) **Coating composition for marking substrates**

(71) Applicant: Ciba Holding Inc., 4057 Basel (CH)
(72) Inventor: Käsesr, Adolf, 4103 Bottmingen (CH); Mistry, Kishor Kumar, Bradford, West Yorkshire BD14 6LR (GB)

(57) **Abstract**

The present invention provides a composition that comprises
i) an acid generating agent and
ii) an elemental halogen generating system or an interhalogen compound generating system.

The present invention also provides a process for the preparation of this composition, a process for forming a coating layer on a substrate using this composition, coated substrates obtainable by the latter process, a process for preparing marked substrates using this composition, and marked substrates obtainable by the latter process.

## Description

The present invention refers to a composition for marking substrates, to a process for the preparation of this composition, to a process for forming a coating layer on a substrate using this composition, to coated substrates obtainable by the latter process, to a process for preparing marked substrates using this composition, and to marked substrates obtainable by the latter process.

Packaging usually needs to be marked with information such as logos, bar codes, expiry dates or batch numbers. One way to achieve this is by coating the packaging with a composition, which upon exposure to heat forms a visible marking.

WO 2007/031454 (our case 23375) describes coating compositions comprising a latent activator, which can be either a salt of an acid and an amine, for example ammonium sulfate, or an acid derivative. These coating compositions can be coated on various substrates and the coated substrates can be marked by exposure to heat generated by an IR laser.

The disadvantage of the coatings of WO 2007/031454 is that insufficient marking results are obtained at high line speeds and low power of the laser.

It is the object of the present invention to provide compositions suitable for coating substrates, wherein the coated substrates show an improved marking behaviour, in particular, when marked with a laser at low power and at high line speeds.

This object is solved by the composition of claim 1, the processes of claims 9, 10, 12 and 14, and the substrates of claims 11, 13 and 16.

The composition of the present invention comprises
i) an acid generating agent and
ii) an elemental halogen generating system or an interhalogen compound generating system.

The acid generating agent can be any agent generating an acid upon thermal treatment.

For example, the acid generating agent can be i) a salt of an acid and an amine or mixtures thereof or ii) an acid derivative or mixtures thereof.

The acid can be an inorganic or organic acid.

Examples of inorganic acids are sulfuric acid, fluorosulfuric acid, chlorosulfuric acid, nitrosylsulfuric acid, thiosulfuric acid, sulfamic acid, sulfurous acid, formamidinesulfinic acid, nitric acid, phosphoric acid, thiophosphoric acid, fluorophosphoric acid, hexafluorophosphoric acid, polyphosphoric acid, phosphorous acid, hydrochloric acid, chloric acid, perchloric acid, hydrobromic acid, hydriodic acid, hydrofluoric acid, ortho-boric acid of the formula H₃BO₃, meta-boric acid of the formula HBO₂ and poly-boric acid of the formula Hₙ₋₂BₙO₂ₙ₋₁, polymolybdic acids such as H₄Mo₈O₂₆, polytungstic acids such as HₐW₁₂O₄₁, phosphomolybdic acids such as H₃Mo₁₂O₄₀P and phosphotungstic acids such as H₃W₁₂O₄₀P.

Examples of organic acids are sulfur-based organic acids such as 4-styrenesulfonic acid, *p*-toluenesulfonic acid, benzene sulfonic acid, xylene sulfonic acid, phenol sulfonic acid, methane sulfonic acid, trifluormethane sulfonic acid, poly(4-styrene sulfonic acid) and coplymers comprising 4-styrene sulfonic acid units such as poly(4-styrenesulfonic acid-comaleic acid), phosphor-based organic acids such as phenyl phosphonic acid, methane phosphonic acid, phenyl phosphinic acid, 2-aminoethyl dihydrogenphosphate, phytic acid, 2-phospho-L-ascorbic acid, glycero dihydrogenphosphate, diethylenetriamine penta(methylenephosphonic acid) (DTPMP), hexamethylenediamine tetra(methylenephosphonic acid) (HDTMP), nitrilotris(methylene phosphonic acid) and 1-hydroxyethylidene diphosphonic acid, and carboxylic acids such as tartaric acid, dichloroacetic acid, trichloroacetic acid, oxalic acid and maleic acid.

Preferably, the acid is selected from the group consisting of sulfuric acid, thiosulfuric acid, sulfurous acid, phosphoric acid, polyphosphoric acid, phosphorous acid, hydrochloric acid, sulfur-based organic acids, phosphor-based organic acids, carboxylic acids and mixtures thereof.

More preferably, the acid is selected from the group consisting of sulfuric acid, hydrochloric acid, sulfur-based organic polyacids and mixtures thereof.

Most preferably, the acid is sulfuric acid.

The amine can be i) a polyaziridine or ii) an amine of formula NR¹R²R³, wherein R¹, R² and R³ can be the same or different and are hydrogen, C₁₋₃₀-alkyl, C₂₋₃₀-alkenyl, C₄₋₈-cycloalkyl, C₅₋₈-cycloalkenyl, aralkyl, aralkenyl or aryl, or R¹ is hydrogen, C₁₋₃₀-alkyl, C₂₋₃₀-alkenyl, C₄₋₈-cycloalkyl, C₅₋₈-cycloalkenyl, aralkyl, aralkenyl or aryl and R² and R³, together with the nitrogen of the amine of formula NR¹R²R³ form a 5- to 7-membered ring, whereby C₁₋₃₀-alkyl, C₂₋₃₀-alkenyl, C₄₋₈-cycloalkyl, C₅₋₈-cycloalkenyl, aralkyl and aralkenyl can be unsubstituted or substituted with NR⁴R⁵R⁶, imino, cyano, cyanamino, hydroxy and/or C₁₋₆-alkoxy, and aryl can be unsubstituted or substituted with NR⁴R⁵R⁶, cyano, cyanamino, hydroxyl, C₁₋₆-alkyl, and/or C₁₋₄-alkoxy, wherein R⁴, R⁵ and R⁶ can be the same or different and are hydrogen, C₁₋₆-alkyl, C₄₋₈-cycloalkyl or aryl.

Polyaziridines are polymerised aziridines, wherein aziridines are compounds sharing the aziridine functional group which is a three membered heterocycle with one amine group and two methylene group. A preferred polyaziridine is polyethylene imine. A preferred polyethylene imine is polyethylene imine which is available on the market under the trade name "Lupasol P".

Examples of C₁₋₃₀-alkyl are methyl, ethyl, propyl, isopropyl, butyl, *sec*-butyl, isobutyl, *tert*-butyl, pentyl, hexyl, heptyl, octyl, nonyl, decyl, undecyl, dodecyl, myristyl, palmityl, stearyl and arachinyl. Examples of C₂₋₃₀-alkenyl are vinyl, allyl, linolenyl, docosahexaenoyl, eicosapentaenoyl, linoleyl, arachidonyl and oleyl. Examples of C₄₋₈-cyclalkyl are cyclopentyl and cyclohexyl. An example of C₅₋₈-cycloalkenyl is cyclohexenyl. Examples of aralkyl are benzyl and 2-phenylethyl. Examples of aryl are phenyl, 1,3,5-triazinyl or naphthyl. Examples of C₁₋₆-alkyl are methyl, ethyl, propyl, isopropyl, butyl, *sec*-butyl, isobutyl, *tert*-butyl, pentyl, and hexyl. Examples of C₁₋₄-alkoxy are methoxy, ethoxy, propoxy, isopropoxy and butoxy.

Preferred C₁₋₃₀-alkyls are C₁₋₁₀-alkyl, more preferred C₁₋₃₀-alkyls are C₁₋₆-alkyl. Preferred C₂₋₃₀-alkenyls are C₂₋₁₀-alkyenyl, more preferred C₂₋₆-alkenyl. Examples of C₁₋₆-alkyl are given above. Examples of C₁₋₁₀-alkyl are methyl, ethyl, propyl, isopropyl, butyl, *sec*-butyl, isobutyl, *tert*-butyl, pentyl, hexyl, heptyl, octyl, nonyl and decyl. Examples of C₂₋₁₀-alkenyl and C₂₋₆-alkenyl are vinyl and allyl.

Examples of amines of formula NR¹R²R³ are ammonia, tris(hydroxymethyl)aminomethane, guanidine, methylamine, ethylamine, propylamine, butylamine, diethylamine, ethylene diamine, 1,2-diaminopropane, ethanolamine, diethanolamine, triethanolamine, cyclohexylamine, aniline, melamine, methylolmelamine, pyrrole, morpholine, pyrrolidine and piperidine.

Preferably, the amine is of formula NR¹R²R³, wherein R¹ is hydrogen and R² and R³ are as defined above.

More preferably, the amine is of formula NR¹R²R³, wherein R¹ and R² are hydrogen and R³ is as defined above.

Most preferably, the amine is ammonia.

Acid derivatives can be esters, amides, anhydrides and thioesters of an acid as defined above, wherein all acidic OH-groups are substituted with OR⁷, NR⁸R⁹, OC(O)R¹⁰ or SR¹¹, wherein R⁷, R⁸, R⁹, R¹⁰ and R¹¹ can be the same or different and can be hydrogen, C₁₋₃₀-alkyl, C₂₋₃₀-alkenyl, C₄₋₈-cycloalkyl, C₅₋₈-cycloalkenyl, aralkyl, aralkenyl or aryl, whereby C₁₋₃₀-alkyl, C₂₋₃₀-alkenyl, C₄₋₈-cycloalkyl, C₅₋₈-cycloalkenyl, aralkyl and aralkenyl can be unsubstituted or substituted with NR¹²R¹³R¹⁴, halogen, cyano, hydroxy and/or C₁₋₆-alkoxy, and aryl can be unsubstituted or substituted with NR¹²R¹³R¹⁴, halogen, cyano, hydroxyl, C₁₋₆-alkyl, and/or C₁₋₆-alkoxy, whereby R¹², R¹³ and R¹⁴ can be the same or different and are hydrogen, C₁₋₆-alkyl, C₄₋₈-cycloalkyl or aryl, provided that R⁷ is not hydrogen.

Examples of halogens are chlorine and bromine.

Examples of acid derivatives are ethyl *p*-toluenesulfonic acid ester, cyclohexyl *p*-toluenesulfonic acid ester, dimethyl hydrogen phosphonate, dimethyl methyl phosphonate and trimethylphosphate.

Preferred acid derivatives are esters of an acid as defined above, wherein all acidic OH-groups are substituted with OR⁷.

Preferably, the acid generating agent is a salt of an acid and an amine or mixtures thereof. More preferably, it is ammonium sulfate.

The elemental halogen generating system and the interhalogen compound generating system can be any system that generates elemental halogen, respectively, interhalogen compounds upon thermal treatment. Examples of elemental halogens are F₂, Cl₂, Br₂ and I₂. Examples of interhalogen compounds are compounds containing solely halogens such as CIF, BrF, BrCl, IF, ICI, IBr, IF₃, IF₅, IF₇, BrF₃, BrF₅, CIF₃, CIF₅ and ICI₃, salts containing polyhalogenide anions such as salts containing polyiodide, salts containing polyinterhalogenide anions such as caesium dichloroiodide or tetramethylammonium octafluoroiodate(VII), as well as compounds containing halogens and pseudohalogens such as chlorcyan. An I₂ generating system is a preferred elemental halogen generating system. An ICI generating system is a preferred interhalogen compound generating system. Preferably, an elemental halogen generating system, more preferably an I₂ generating system is used.

Examples of elemental halogen generating systems are i) systems comprising a metal halogenide and an oxidizing agent and ii) systems comprising a metal salt of a halogen oxygen acid and a reducing agent. The metal can be, for example, an alkali or alkaline earth metal.

Examples of systems containing metal halogenides and oxidizing agents are KBr/Cl₂ (which can generate Br₂) and KI/KIO₃ (which can generate I₂).

Examples of halogen oxygen acids are hypohalogenous acid (HXO), halogenous acid (HXO₂), halogenic acid (HXO₃) and perhalogenic acid (HXO₄), wherein X denotes halogen such as Cl, Br and I.

Examples of systems containing metal salts of halogen oxygen acids and reducing agents are KIO₃/KI (which can generate I₂) and KCIO₃/KI (which can generate I₂).

The preferred elemental halogen generating systems are KIO₃/KI and KCIO₃/KI. The most preferred elemental halogen generating systems is KIO₃/KI.

Some elemental halogen generating systems might require the presence of an acid in order to generate the elemental halogen. However, it is usually not necessary to add an additional acid, as the acid generated by the acid generating agent is usually sufficient to effect elemental halogen generation.

Examples of interhalogen compound generating systems are Nal/NaOCI (which generates ICI) and Nal/FeCl₃ (which generates ICI).

The composition can also comprise a char forming compound. Char forming compounds are compounds which char upon heat treatment. The char forming compounds are usually compounds having a high carbon and oxygen content. Preferably, the char-forming compound is a carbohydrate or a carbohydrate derivative, wherein the carbonyl group has been reduced to a hydroxyl group, a so-called sugar alcohol. The char-forming compound can also be a mixture of one or more carbohydrates and/or sugar alcohols.

Examples of carbohydrates are monosaccharides, disaccharides and polysaccharides. Examples of monosaccharides are glucose, mannose, galactose, arabinose, fructose, ribose, erythrose and xylose. Examples of disaccharides are maltose, cellobiose, lactose and saccharose. Examples of polysaccharides are cellulose, starch, gum arabic, dextrin and cyclodextrin.

Examples of sugar alcohols are *meso*-erythritol, sorbitol, mannitol and pentaerythritol.

Preferred char forming compounds are monosaccharides and disaccharides, for example sucrose (also called saccharose) and galactose. More preferably, the char forming compound is a reducing monosaccharide or reducing disaccharide. The most preferred char forming compound is sucrose.

The composition can also comprise a binder, preferably a polymeric binder.

The polymeric binder can be a polymer or a mixture of polymers selected from the group consisting of acrylic polymers, styrene polymers, hydrogenated products of styrene polymers, vinyl polymers, vinyl polymer derivatives, polyolefins, hydrogenated polyolefins, epoxidized polyolefins, aldehyde polymers, aldehyde polymer derivatives, ketone polymers, epoxide polymers, polyamides, polyesters, polyurethanes, polyisocyanates, sulfone-based polymers, silicium-based polymers, natural polymers and natural polymer derivatives.

If the binder comprises two polymers, the polymers can form a core shell polymer, wherein one polymer is the shell and the other the core.

Acrylic polymers can be polymers formed from a monomer mixture comprising at least one acrylic monomer and optionally other ethylenically unsaturated monomer such as a styrene monomer, vinyl monomer, olefin monomer or an α, β-unsaturated carboxylic acid monomer by polymerization of the respective monomers.

Examples of acrylic monomers are (meth)acrylic acid, (meth)acrylamide, (meth)acrylonitrile, ethyl (meth)acrylate, butyl (meth)acrylate, hexyl (meth)acrylate, 2-ethylhexyl (meth)acrylate, glycidyl methacrylate, acetoacetoxyethyl methacrylate, dimethylaminoethyl acrylate and diethylaminoethyl acrylate. Examples of styrene monomers are styrene, 4-methylstyrene and 4-vinylbiphenyl. Examples of vinyl monomers are vinyl alcohol, vinyl chloride, vinylidene chloride, vinyl isobutyl ether and vinyl acetate. Examples of olefin monomers are ethylene, propylene, butadiene and isoprene and chlorinated or fluorinated derivatives thereof such as tetrafluroethylene. Examples of α, β-unsaturated carboxylic acid monomers are maleic acid, itaconic acid, crotonic acid, maleic anhydride and maleimide.

Examples of acrylic polymers are poly(methyl methacrylate) and poly(butyl methacrylate), polyacrylic acid, styrene/2-ethylhexyl acrylate copolymer, styrene/acrylic acid copolymer.

Styrene polymers can be polymers formed from a monomer mixture comprising at least one styrene monomer and optionally at least one vinyl monomer, olefin monomer and/or α, β-unsaturated carboxylic acid monomer by polymerization of the respective monomers. Examples of styrene polymers are polystyrene (PS), styrene butadiene styrene block polymers, styrene ethylene butadiene block polymers, styrene ethylene propylene styrene block polymers and styrene-maleic anhydride copolymers. So-called "hydrocarbon resins" are usually also styrene polymers.

Vinyl polymers can be polymers formed from a monomer mixture comprising at least one vinyl monomer and optionally at least one olefin monomer and/or α, β-unsaturated carboxylic acid monomer by polymerization of the respective monomers. Examples of vinyl polymers are polyvinyl chloride (PVC), polyvinyl pyrrolidone, polyvinylidenfluoride, polyvinylalcohol, polyvinylacetate, partially hydrolysed polyvinyl acetate and methyl vinyl ether-maleic anhydride copolymers. Examples of vinyl polymer derivatives are carboxy-modified polyvinyl alcohol, acetoacetyl-modified polyvinyl alcohol, diacetone-modified polyvinyl alcohol and silicon-modified polyvinyl alcohol.

Polyolefins can be polymers formed from a monomer mixture xomprising at least one olefin monomer and optionally at least one α, β-unsaturated carboxylic acid monomer by polymerization of the respective monomers. Examples of polyolefines are low-density polyethylene (LDPE), high-density polyethylene (HDPE), polypropylene (PP), biaxially orientated polypropylene (BOPP), polybutadiene, perfluoroethylene (Teflon) and isopropylene-maleic anhydride copolymer

Aldehyde polymers can be polymers formed from at least one aldehyde monomer or polymer and at least one alcohol monomer or polymer, amine monomer or polymer and/or urea monomer or polymer. Examples of aldehyde monomers are formaldehyde, furfural and butyral. Examples of alcohol monomers are phenol, cresol, resorcinol and xylenol. An example of a polyalcohol is polyvinyl alcohol. Examples of amine monomers are aniline and melamine. Examples of urea monomers are urea, thiurea and dicyandiamide. Examples of aldehyde polymers are polyvinyl butyral formed from butyral and polyvinyl alcohol, melamine-formaldehyde polymer and urea-formaldehyde polymer. Aldehyde polymers formed from phenol and an aldehyde are called "phenol resins". Examples of aldehyde polymer derivatives are alkylated aldehyde polymers.

An example of a ketone polymer is ketone resin, a condensation product of methyl cyclohexanone and/or cyclohexanone.

Epoxide polymers can be polymers formed from at least one epoxide monomer and at least one alcohol monomer and/or amine monomer. Examples of epoxide monomers are epichlorohydrine and glycidol. Examples of alcohol monomers are phenol, cresol, resorcinol, xylenol, bisphenol A and glycol. An example of epoxide polymer is phenoxy resin, which is formed from epichlorihydrin and bisphenol A.

Polyamides can be polymers formed from at least one monomer having an amide group or an amino as well as a carboxy group or from at least one monomer having two amino groups and at least one monomer having two carboxy groups. An example of a monomer having an amide group is caprolactam. An example of a diamine is 1,6-diaminohexane. Examples of dicarboxylic acids are adipic acid, terephthalic acid, isophthalic acid and 1,4-naphthalenedicarboxylic acid. Examples of polyamides are polyhexamethylene adipamide and polycaprolactam.

Polyesters can be formed from at least one monomer having a hydroxy as well as a carboxy group, anhydride group or lactone group or from at least one monomer having two hydroxy groups and at least one monomer having two carboxy groups, anhydride groups or a lactone group. An example of a monomer having a hydroxy as well as a carboxy group is adipic acid. An example of a diol is ethylene glycol. An example of a monomer having a lactone group is carprolactone. Examples of dicarboxylic acids are terephthalic acid, isophthalic acid and 1,4-naphthalenedicarboxylic acid. An example of a polyester is polyethylene terephthalate (PET). Polyesters formed from an alcohol and an acid or acid anhydride are called "alkyd resins".

Polyurethane can be polymers formed from at least one diisocyanate monomer and at least one polyol monomer and/or polyamine monomer. Examples of diisocyanate monomers are hexamethylene diisocyanate, toluene diisiocyanate, isophorone diisocyanate and diphenylmethane diisocyanate.

Examples of sulfone-based polymers are polyarylsulfone, polyethersulfone, polyphenyl-sulfone and polysulfone. An example of a polysulfone is a polymer formed from 4,4-dichlorodiphenyl sulfone and bisphenol A.

Examples of silicum-based polymers are polysilicates, silicone resins and polysiloxanes.

Examples of natural polymers are starch, cellulose, gelatine, casein, rosin, terpene resin, shellac, copal Manila, asphalts, gum Arabic and natural rubber. Examples of natural polymer derivatives are dextrin, oxidised starch, starch-vinyl acetate graft copolymers, hydroxyethyl cellulose, hydroxypropyl cellulose, nirocellulose, methyl cellulose, ethyl cellulose, carboxymethyl cellulose, acetyl cellulose, acetyl propionyl cellulose, acetyl butyryl cellulose, propionyl cellulose, butyryl celluloseand chlorinated rubber.

The polymers listed above can be uncrosslinked or crosslinked.

The polymeric binders are known in the art and can be produced by known methods.

Preferably, the polymeric binder is a polymer or mixture of polymers selected from the group consisting of acrylic polymers, styrene polymers, vinyl polymers, vinyl polymer derivative, polyolefins, polyurethanes and natural polymers and derivatives thereof.

More preferably, the polymeric binder is a polymer or mixture of polymers selected from the group consisting of acrylic polymers, styrene butadiene copolymers, styrene-maleic anhydride copolymers, polyvinyl alcohol, polyvinyl acetate, partially hydrolysed polyvinyl acetate, methyl vinyl ether-maleic anhydride copolymers, carboxy-modified polyvinyl alcohol, acetoacetyl-modified polyvinyl alcohol, diacetone-modified polyvinyl alcohol and silicon-modified polyvinyl alcohol, isopropylene-maleic anhydride copolymer, polyurethane, cellulose, gelatine, caesin, oxidised starch, starch-vinyl acetate graft copolymers, hydroxyethyl cellulose, methyl cellulose, ethyl cellulose, carboxymethyl cellulose and acetyl cellulose.

Most preferably, the polymeric binder is polyvinyl alcohol or an acrylic polymer as sold for example by Ciba under the tradename Ciba® Glascol® such as Ciba® Glascol® LE15, LS26, E11 or C44. Ciba® Glascol® LS 26 is a core shell polymer consisting of 70 weight parts 55/45 (w/w) styrene/2-ethylhexyl acrylate copolymer, which functions as the core polymer, and 30 weight parts of styrene/acrylic acid copolymer, which functions as the shell polymer.

The composition can also comprise a solvent. The solvent can be water, an organic solvent or mixtures thereof.

Examples of organic solvents are C₁₋₄-alkanols, C₂₋₄-polyols, C₃₋₆-ketones, C₄₋₆-ethers, C₂₋₃-nitriles, nitromethane, dimethylsulfoxide, dimethylformamide, dimethylacetamide, N-methyl pyrolidone and sulfolane, whereby C₁₋₄-alkanols and C₂₋₄-polyols may be substituted with C₁₋₄-alkoxy. Examples of C₁₋₄-alkanols are methanol, ethanol, propanol, isopropanol, butanol, isobutanol, *sec*-butanol and *tert*-butanol. Examples of a C₁₋₄-alkoxy-derivatives thereof are 2-ethoxyethanol and 1-methoxy-2-propanol. Examples of C₂₋₄-polyols are glycol and glycerol. Examples of C₃₋₆-ketones are acetone and methyl ethyl ketone. Examples of C₄₋₆-ethers are dimethoxyethane, diisopropylethyer and tetrahydrofurane. An example of a C₂₋₃-nitrile is acetonitrile.

Preferably, the organic solvent is selected from the group consisting of C₁₋₄-alkanols, C₂₋₄-polyols, C₃₋₆-ketones, dimethylformamide and dimethylacetamide, whereby C₁₋₄-alkanols and C₂₋₄-polyols may be substituted with C₁₋₄-alkoxy.

More preferably, the solvent is water.

The composition can also optionally comprise a reducing agent. Any suitable reducing agent can be used. Examples of reducing agents are alkali or earth alkaline metal salts of sulfite, hydrogensulfite and dithionite, transition metal salts such as iron(III)chloride or copper(II)sulfate, alcohols and polyols. Preferably, the reducing agent is ascorbic acid or an alkali metal salt of dithionite such as sodium dithionite.

The composition can comprise one or more additional components.

The additional components are usually included in order to improve the performance of the composition. Examples of additional components are IR absorbers, UV absorbers, pigments, stabilizers, antioxidants, rheology modifiers, wetting agents, biocides, bases, smoke suppressants and taggants. Taggants are various substances added to a product to indicate its source of manufacture.

IR absorbers can be organic or inorganic. Examples of organic IR absorbers are alkylated triphenyl phosphorothionates, for example as sold under the trade name Ciba® Irgalube® 211 or Carbon Black, for example as sold under the trade names Ciba® Microsol® Black 2B or Ciba® Microsol® Black C-E2.

Examples of inorganic IR absorbers are oxides, hydroxides, sulfides, sulfates and phosphates of metals such as copper, bismuth, iron, nickel, tin, zinc, manganese, zirconium and antimony, including antimony(V) oxide doped mica and tin(IV) oxide doped mica,

An example of a UV absorber is 2-hydroxy-4-methoxybenzophenone.

Pigments can be added as inorganic IR absorbers, for enhanced contrast between unimaged and imaged areas or as a security feature.

Examples of pigments which function as inorganic IR absorbers are kaolin, calcined kaolin, mica, aluminum oxide, aluminum hydroxide, aluminum silicates, talc, amorphous silica and colloidal silicon dioxide.

Examples of pigments which can be added for enhanced contrast between umimaged and imaged area are titan dioxide, calcium carbonate, barium sulfate, polystyrene resin, urea-formaldehyde resin, hollow plastic pigment.

Examples of pigments which can be added as a security feature are fluorescent pigments or magnetic pigments.

Examples of rheology modifiers are xanthan gum, methylcellulose, hydroxypropyl methylcellulose, or acrylic polymers such as sold under the tradenames Ciba® Rheovis® 112, Ciba® Rheovis® 132 and Ciba® Rheovis® 152.

An example of a wetting agent is Ciba® Irgaclear® D, a sorbitol based clarifying agent.

Examples of biocides are Acticide® MBS, which includes a mixture of chloromethyl isothiazolinone and methyl isothiazolinone, Biocheck® 410, which includes a combination of 2-dibromo-2,4-dicyanobutane and 1,2-benzisothiazolin-3-one, Biochek®721M, which includes a mixture of 1,2-dibromo-2,4-dicyanobutane and 2-bromo-2-nitro-1,3-propandiol and Metasol®TK 100, which includes 2-(4-thiazolyl)-benzimidazole.

Bases can be added in order to adjust the pH of the composition. Suitable bases are alkali and earth alkaline metal hydroxides, or amines such as ammonia. Examples of alkali hydroxides are sodium hydroxide and potassium hydroxide.

An example of a smoke suppressant is ammonium octamolybdate.

The elemental halogen generating system or the interhalogen compound generating system can be, optionally, encapsulated in a polymeric matrix.

The polymeric matrix can comprise one or more polymers selected from the group consisting of acrylic polymers, styrene polymers, hydrogenated products of styrene polymers, vinyl polymers, vinyl polymer derivatives, polyolefins, hydrogenated polyolefins, epoxidized polyolefins, aldehyde polymers, aldehyde polymer derivatives, ketone polymers, epoxide polymers, polyamides, polyesters, polyurethanes, polyisocyanates, sulfone-based polymers, silicium-based polymers, natural polymers and natural polymer derivatives. Examples of the various polymers are given above when discussing possible binders of the composition of the present invention.

Encapsulation of the elemtental halogen generating system or the interhalogen compound generating system in a polymeric matrix may be achieved, for example, by preparing the polymeric matrix in the presence of the halogen generating system or the interhalogen compound generating system.

The polymeric matrix may be prepared, for example, by polymerizing suitable monomers in the presence of an initiator to form the one or more polymers of the polymeric matrix. This method of preparation is particularly suitable for acrylic polymers, styrene polymers, vinyl polymers and polyolefins. The initiator can be, for example, a peroxide, a persulfate, an azo compound, a redox couple or mixtures thereof. Examples of peroxides are hydrogen peroxide, *tert*-butyl peroxide, cumene hydroperoxide and benzoyl peroxide. Examples of persulfates are ammonium, sodium or potassium persulfate. Examples of azo compounds are 2,2-azobisisobutyronitrile and 4,4'-azobis(4-cyanovaleric acid). Examples of redox couples are *tert*-butylhydrogenperoxide/sodium sulfite, sodium persulfate/sodium hydrogensulfite or sodium chlorate/sodium hydrogensulfite.

The polymeric matrix may be also prepared, for example, by reacting one or more prepolymers, which carry functional groups capable of crosslinking with a crosslinking agent, with a crosslinking agent. Examples of functional groups are carboxy (-COOH), hydroxyl (-OH), amino (-NH₂) and chloro (-CI). Examples of polymers carrying functional groups are polyacrylic acid, styrene/acrylic acid copolymer, polyvinyl chloride (PVC) and polyvinylalcohol and cellulose derivatives. Examples of crosslinking agents capable of reacting with functional groups are silane derivatives such as vinylsilane, carbodiimide derivatives such as N,N'-dicyclohexylcarbodiimide (DCC)and 1-ethyl-3-(3-dimethylaminopropyl) carbodiimide hydrochloride (EDC), aziridine derivatives, epoxide derivatives or multivalent metal salts such as zinc oxide or ammonium zirconium carbonate.

The acid generating agent, the char forming compound, the reducing agent or the additional components can, optionally, be encapsulated in a polymeric matrix as well. It is possible that only one component of the composition, for example only the elemental halogen generating system, is encapsulated. It is however also possible that two or more of the components of the composition are encapsulated either separately or together.

The composition of the present invention can comprise 0.1 to 80%, preferably 1 to 50%, more preferably, 2 to 30%, most preferably 5 to 20% by weight of the acid generating agent based on the weight of the total composition. This refers to the weight of the not-encapsulated acid generating agent.

The composition of the present invention can comprise 0.01 to 80%, preferably 0.1 to 50%, more preferably 0.1 to 20% and most preferably 1 to 10% by weight of the elemental halogen generating system or interhalogen compound generating system based on the weight of the total composition.

The composition of the present invention can comprise 0 to 80%, preferably 1 to 70%, more preferably 1 to 40% and most preferably 2 to 20%, by weight of the char forming compound based on the weight of the total composition.

The composition of the present invention can comprise 0 to 80%, preferably 1 to 70%, more preferably 5 to 50% and most preferably 10 to 30%, by dry weight of the binder based on the weight of the total composition.

The composition of the present invention can comprise 0 to 90%, preferably 1 to 90%, more preferably 10 to 80% and most preferably 30 to 70%, by weight of the solvent based on the weight of the total composition.

The composition of the present invention can comprise 0 to 80%, preferably 0.1 to 40%, more preferably 0.1 to 20% and most preferably 1 to 10%, by weight of the reducing agent based on the weight of the total composition.

The composition of the present invention can comprise 0 to 30%, preferably 0 to 20% and more preferably 0 to 10% by weight of additional components based on the weight of the total composition.

The composition can comprise 0.1 to 80% by weight of the acid generating agent, 0.01 to 80% by weight of the elemental halogen generating system or the interhalogen compound generating system, 0 to 80 % by weight of the char forming compound, 0 to 80% by dry weight of the binder, 0 to 90% by weight of the solvent, 0 to 80% by weight of the reducing agent and 0 to 30% by weight of additional components based on the weight of the composition.

Preferably, the composition can comprise 1 to 50% by weight of the acid generating agent, 0.1 to 50% by weight of the elemental halogen generating system or the interhalogen compound generating system, 1 to 70 % by weight of the char forming compound, 1 to 70% by dry weight of the binder, 1 to 90% by weight of the solvent, 0.1 to 40% by weight of the reducing agent and 0 to 20% by weight of additional components based on the weight of the composition.

More preferably, the composition can comprise 2 to 30% by weight of the acid generating agent, 0.1 to 20% by weight of the elemental halogen generating system or the interhalogen compound generating system, 1 to 40 % by weight of the char forming compound, 5 to 50% by dry weight of the binder, 10 to 80% by weight of the solvent, 0.1 to 20% by weight of the reducing agent and 0 to 10% by weight of additional components based on the weight of the composition.

Most preferably, the composition can comprise 5 to 20% by weight of the acid generating agent, 1 to 10% by weight of the elemental halogen generating system or the interhalogen compound generating system, 2 to 20 % by weight of the char forming compound, 10 to 30% by dry weight of the binder, 30 to 70% by weight of the solvent, 1 to 10% by weight of the reducing agent and 0 to 10% by weight of additional components based on the weight of the composition.

Also part of the present invention is a process for preparing the composition of the present invention, which process comprises the step of mixing the acid generating agent and the elemental halogen or interhalogen compound generating system, optionally in the presence of a char forming compound, a binder, a solvent, a reducing agent and/or additional components.

Also part of the present invention is a process for forming a coating layer on a substrate, which process comprises the steps of i) applying the compositions of the present invention to the substrate and ii) forming the coating layer.

The substrate can be a sheet or a three dimensional object, it can be transparent or opaque and it can have an even or uneven surface. An example of a substrate having an uneven surface is a filled paper bag, such as a paper bag of cement. The substrate can be paper, cardboard, metal, wood, textiles, glass, ceramic or a polymer or mixtures thereof. The substrate can also be a pharmaceutical tablet or foodstuff. Examples of polymers are polyethylene terephthalate, low density-polyethylene, polypropylene, orientated polypropylene, biaxially orientated polypropylene, polyether sulfone, polyvinyl chloride polyester and polystyrene. Preferably, the substrate is paper, cardboard or a polymer.

The compositions of the present invention can be applied to the substrate by using a standard coating application as such as a bar coater application, rotation application, spray application, curtain application, dip application, air application, knife application, blade application or roll application. The compositions can also be applied to the substrate by various printing methods such as silk screen printing, gravure printing, offset printing and flexo printing. If the substrate is paper, the compositions can also be applied in the size press or in the wet-end section of the paper machine.

After being applied, the compositions can be dried, for example at ambient or elevated temperature.

The thickness of the obtained coating layer is usually chosen to be in the range of 0.1 to 1000 µm. Preferably, it is in the range of 1 to 500 µm. More preferably, it is in the range of 1 to 200 µm. Most preferably, it is in the range of 1-20 µm.

Also part of the present invention is a substrate having a coating layer obtainable by above process.

Another part of the present invention is a process for forming a protective coating layer on the substrate coated with the composition of the present invention, which process comprises the step of applying a protective coating composition on the top of the coating layer of the substrate having the coating layer formed by the composition of the present invention in order to form a protective coating layer.

Any suitable protective coating composition can be used. If a substrate which is has a coating layer formed by the composition of the presemt invention and a protective coating layer on top of this layer, is marked by laser-irradiation, the protective coating layer ideally does not absorb at the wavelength of the marking laser so that the coating layer formed by the coating composition of the present invention can be imaged through the protective coating layer without damaging or marking the protective coating layer. Also the protective coating layer is ideally chosen that it does not result in colouration of the coating layer formed from the composition of the present invention before the laser irradiation.

Usually the protective coating composition comprises a binder and a solvent. The binder of the protective coating composition can be any of the binders listed above. The solvent can be any of the solvents listed above.

The protective coating composition can be applied to the substrate coated with the composition of the present invention using a standard coating application as listed above. After being applied, the protective coating composition can be dried, for example at ambient or elevated temperature.

The thickness of the obtained protective coating layer is usually chosen to be in the range of 0.1 to 1000 µm. Preferably, it is in the range of 1 to 500 µm. More preferably, it is in the range of 1 to 200 µm. Most preferably, it is in the range of 1 to 20 µm.

Another part of the invention is a substrate having a coating layer formed by the composition of the present invention and, on top, a protective coating layer obtainable by above process.

Also part of the invention is a process for preparing a marked substrate, which comprises the steps of i) providing the above substrate having a coating layer formed from the composition of the present invention or the above substrate having a coating layer formed from the composition of the present invention and on top a protective coating layer, and ii) exposing those parts of the substrate of step i), where a marking is intended, to heat in order to generate a marking.

The heat, that generates the marking, can be produced by any suitable means. For example, the heat can be produced by a thermal printer or by electromagnetic irradiation such UV, IR and VIS irradiation derived from a suitable laser.

Preferably, the heat is produced by UV and IR irradiation derived from a UV, respectively, IR laser. Examples of IR lasers are CO₂ lasers, Nd:YAG lasers and IR semicoductor lasers. More preferably, the heat is produced by IR irradiation derived from an IR laser, most preferably, from a CO₂ laser.

Typically the exact power of the IR laser and the line speed is determined by the application and chosen to be sufficient to generate the image, for example, when the wavelength of the IR laser is 10600 nm and the diameter of the laser beam is 0.35 mm, the power is typically 0.5 to 4 W, and the line speed is typically 300 to 1000 mm/s.

Usually, the coated side of the substrate of step i) is exposed to heat. However, if the substrate is transparent, also the uncoated side could be exposed to heat.

Yet another aspect of the invention is the marked substrate, which is obtained by above process.

The substrates having the coating layer formed from the composition of the present invention or the substrates having the coating layer formed from the composition of the present invention, and, on top, a protective-coating layer could additionally be coated with an adhesive coating layer in order to be used as a label. The adhesive coating layer is usually formed on the uncoated side of the substrate. However, if the substrate is transparent, the adhesive coating layer could also be formed on top of the coating layer formed from the composition of the present invention, respectively, on top, of the protective coating layer.

The composition of the present invention has the advantage that it forms coating layers which upon heat exposure yield improved marking results, in particular when marked with a laser at high line speeds and low power, while showing only a negligible discolouration.

### Examples

### Example 1

### Preparation of an acrylic binder

To a 1 litre resin pot fitted with mechanical stirrer, condenser, nitrogen inlet, temperature probe and feed inlets are placed 98.9 g water and 483.9 g Joncryl® 8078, a solution of an ammonium salt of a low molecular weight styrene acrylic copolymer. The contents are heated to 85 °C and degassed with nitrogen for 30 minutes. A monomer phase is prepared by mixing 192.5 g styrene with 157.5 g 2-ethylhexyl acrylate. An initiator feed is prepared by dissolving 1.97 g ammonium persulfate in 63.7 g water. When the reactor is at temperature and degassed, 0.66g ammonium persulfate are added to the reactor. After 2 minutes the monomer and initiator feeds are started appropriate to a 3 and 4 hour feed respectively. The reactor contents are maintained at 85 °C throughout the feeds. After completion of the feeds, the reactor contents are held for a further 1 hour at 85 °C before being cooled down to below 40 °C at which point 0.9 g Acticide LG, a biocide containing chlorinated and non-chlorinated methyl isothiazolones, is added. This results in an emulsion polymer of 49.2% solids, pH 8.3 and a Brookfield RVT viscosity of 1100 cPs.

### Example 2

Preparation of a coating composition comprising an elemental iodine generatoring system 5.0 g sucrose, 1.0 g ascorbic acid, 5.0 g ammonium sulfate and 1.8 g potassium iodide are dissolved in 16.9 g of water. After adjustment of the pH value to 8 with aqueous ammonia, 0.4 g potassium iodate is added and the final pH value is adjusted to 8.5 with aqueous ammonia. This solution is added under stirring to 20 g of the acrylic binder of example 1. The total weight of the dispersion is adjusted to 50 g with water and stirred for 15 minutes. The weight% of the components of the composition is depicted in table 1.

### Comparative example 1

### Preparation of a coating composition without an elemental iodine generatoring system

This composition is prepared as described in example 2 but ascorbic acid, potassium iodide and potassium iodate are replaced by water. The weight% of the components of the composition are depicted in table 1.

### Comparative example 2

### Preparation of a coating composition without an acid generating agent and without an elemental iodine generatoring system

This composition is prepared as described in comparative example 1, but ammonium sulfate is replaced by water. The weight% of the components of the composition are depicted in table 1.

**Table 1.^{a}based on the weight of the coating composition.**

| Example | Acrylic binder [dry weight%]^{a} | Sucrose [weight%]^{a} | Ammonium sulfate [weight %]^{a} | KI [weight%]^{a}/ KIO₃ [weight%]^{a} | Ascorbic acid [weight%]^{a} |
|---|---|---|---|---|---|
| 2 | 20 | 10 | 10 | 3.6/0.8 | 2 |
| Comp.1 | 20 | 10 | 10 | 0 | 0 |
| Comp.2 | 20 | 10 | 0 | 0 | 0 |

### Application of the coating compositions of example 2 and comparative examples 1 to 2 on paper

The coating compositions of example 2 and comparative examples 1 and 2 are applied by a 12 µm coating bar onto Xerox paper (coated "Cento Copy" paper purchased from M-Real, Biberist, Switzerland) and dried to yield a transparent coating. The coatings are imaged using a CO₂ laser (wavelength 10'600 nm, diameter of laser beam 0.35 mm). Power and line speed of the laser and relative marking results are depicted in table 2. The markings are of brownish black nature. The colouration aspects and the marking results are depicted in table 2.

**Table 2.**

| Example | aspect composition | aspect coated paper after 1 week | Marking results | | |
|---|---|---|---|---|---|
| | | | Circles 1-2 W and 1000 mm/s | Text 1 Wand 500 mm/s | Text 2 W and 1000 mm/s |
| 2 | beige | light pink | + | + | ± |
| Comp. 1 | white | white | ± | ± | - |
| Comp. 2 | white | white | - | - | - |

The coating composition of example 2 exhibits better marking results in the categry "Text 2 W/1000 mmsec" than the comparative coating composition, which does not contain the elemental iodine generating system. Although, the coating composition of example 2 is slightly coloured itself and also the paper coated with the coating composition of example 2, this slight colouration is acceptable when considering the improvement of the marking results. The coating composition of comparative example 2 containing no ammonium sulfate does not show any marking.

### Application of the coating compositions of example 2 on paper, followed by application of a protective coating composition

The coating composition of example 2 is applied by a 12 µm coating bar onto Xerox paper as described above. After drying, various protective coating compositions, for example acrylate based or polyvinyl alcohol based protective coating compositions, are applied on top of the coating layer formed from the coating composition of example 2. The coating layer formed from the coating composition of example 2 is then imaged through the protective coating layer using a CO₂ IR laser as described above to yield markings of the same quality as without the protective coating layer.

### Examples 3 to 5

### Preparation of coating composition comprising an elemental iodine generatoring system

The compositions of examples 3 to 5 are prepared in analogy to the one of example 2, except that sucrose is replaced by starch. The composition of example 5 also contains sodium dithionite. The weight% of the components of the compositions are depicted in table 3.

**Table 3:^{a}based on the weight of the coating composition.**

| Example | Acrylic binder [dry weight%]^{a} | Starch [weight%]^{a} | Ammonium sulfate [weight%]^{a} | KI [weight%]^{a}/ KIO₃ [weight%]^{a} | Ascorbic acid [weight%]^{a} | Sodium dithionite [weight%]^{a} |
|---|---|---|---|---|---|---|
| 3 | 20 | 10 | 10 | 3.6/0.8 | 1 | 0 |
| 4 | 20 | 10 | 10 | 3.6/0.8 | 2 | 0 |
| 5 | 20 | 10 | 10 | 3.6/0.8 | 2 | 1 |

### Application of the coating compositions of examples 3 to 5 on paper

The coating compositions of examples 3 to 5 are applied in analogy to the coating composition of example 2 onto Xerox paper and imaged using a CO₂ laser. The colouration aspects and the marking results are depicted in table 4.

**Table 4.**

| Example | aspect composition | aspect coated paper after 1 week | Marking results | | |
|---|---|---|---|---|---|
| | | | Circles 1-2 W and 1000 mm/s | Text 1 W and 500 mm/s | Text 2 W and 1000 mm/s |
| 3 | slightly pink | beige | ± | ± | - |
| 4 | slight beige | light beige | ± | ± | - |
| 5 | slight beige | nearly white | ± | ± | - |

## Claims

1. A composition that comprises
i) an acid generating agent and
ii) an elemental halogen generating system or an interhalogen compound generating system.

2. The composition of claim 1, wherein the acid generating agent is i) a salt of an acid and an amine or mixtures thereof or ii) an acid derivative or mixtures thereof.

3. The composition of claim 1 or claim 2, wherein the composition also comprises a char forming compound.

4. The composition of any of claims 1 to 3, wherein the composition also comprises a binder.

5. The composition of any of claims 1 to 4, wherein the composition also comprises a solvent.

6. The composition of any of claims 1 to 5, wherein the composition also comprises a reducing agent.

7. The composition of any of claims 1 to 6, wherein the composition also comprises additional components.

8. The composition of any of claims 1 to 7, wherein the elemental halogen generating system or the interhalogen compound generating system is encapsulated in a polymeric matrix.

9. A process for the preparation of a composition of any of claims 1 to 8, which process comprises the step of mixing the acid generating agent and the elemental halogen or interhalogen compound generating system

10. A process for forming a coating layer on a substrate, which process comprises the steps of i) applying the compositions of any of claims 1 to 8 to the substrate and ii) forming the coating layer.

11. A substrate obtainable by the process of claim 10.

12. A process of forming a protective coating layer on the substrate of claim 11, which process comprises the step of applying a protective coating composition on top of the coating layer of the substrate of claim 11 in order to form a protective coating layer.

13. A substrate obtainable by the process of claim 12.

14. A process for preparing a marked substrate, which comprises the steps of i) providing the substrate of claim 11 or claim 13, and ii) exposing those parts of the substrate of step i), where a marking is intended, to heat in order to generate a marking.

15. The process of claim 14, wherein the heat is produced by UV and IR irradiation derived from a UV, respectively, IR laser.

16. A marked substrate obtainable by the process of claim 15.
